# EUROPEAN PATENT APPLICATION

(11) **EP 2 485 413 A1**
(43) Date of publication of application: **08.08.2012**
(21) Application number: 10820483.5
(22) Date of filing: 27.09.2010
(51) Int. Cl.: H04B 10/04, H04B 10/06, H04B 10/142, H04B 10/152, H04J 14/00, H04J 14/04, H04J 14/06, H04L 27/18, H04L 27/34

(54) **MULTILEVEL MODULATED LIGHT TRANSMITTING/RECEIVING APPARATUS AND MULTILEVEL MODULATED LIGHT TRANSMITTING/RECEIVING METHOD**

(30) Priority: 29.09.2009 JP 2009225084
(71) Applicant: Mitsubishi Electric Corporation, Tokyo 100-8310 (JP)
(72) Inventor: ONOHARA, Kiyoshi, Tokyo 100-8310 (JP); KUBO, Kazuo, Tokyo 100-8310 (JP); MIZUOCHI, Takashi, Tokyo 100-8310 (JP)
(74) Representative: Pfenning, Meinig & Partner GbR
(86) International application number: PCT/JP2010/066693
(87) International publication number: WO 2011/040368

(57) **Abstract**

To easily realize an optical receiving circuit adapted to a plurality of modulation schemes and to obtain a multilevel modulated optical transceiver and a multilevel modulated optical transmitting/receiving method which achieve low power consumption and high speed, a digital signal processing optical transceiver (20) includes: a receiver front end (30) for separating an optical reception signal from a communication path into a total of four channels including an I-channel and a Q-channel of an X-polarized wave component and an I-channel and a Q-channel of a Y-polarized wave component; and a digital signal processing unit (50) for: performing signal point determination with respect to signals of the four channels; when there are only two signal points, determining that a modulation scheme is binary phase shift keying, and selecting two channels including an I-channel component of an X-polarized wave and an I-channel component of a Y-polarized wave and performing signal processing thereon; and when there are four signal points, determining that the modulation scheme is quadrature phase shift keying, and selecting the four channels including the I-channel component and a Q-channel component of the X-polarized wave and the I-channel component and a Q-channel component of the Y-polarized wave and performing the signal processing thereon.

## Description

### Technical Field

The present invention relates to a multilevel modulated optical transceiver and a multilevel modulated optical transmitting/receiving method, which are applied to a digital communication device such as an optical communication system.

### Background Art

For example, the following are among optical modulation schemes applied to conventional multilevel modulated optical transceiver and multilevel modulated optical transmitting/receiving methods for transmitting and receiving, as optical signals, forward error correction (FEC) frames obtained by adding FEC code to data frames containing information data and an overhead.
On-off keying (OOK)
Binary phase shift keying (BPSK)
Quadrature phase shift keying (QPSK)
Differential quadrature phase shift keying (Differential QPSK: DQPSK)

Further, if polarization orthogonal multiplexing is performed for each optical modulation scheme, it is possible to perform data communication at a higher bit rate (for example, see Non Patent Literature 1 and Non Patent Literature 2).

### Citation List

### Non Patent Literature

[NPL 1] ITU-T Recommendation G. 709
[NPL 2] OIF-VSR5-01.0

### Summary of Invention

### Technical Problem

However, the conventional technology has the following problems.
In the case where the conventional multilevel modulated optical transceiver and multilevel modulated optical transmitting/receiving method support the use of a plurality of modulation schemes, circuits adapted for the respective modulation schemes are necessary. For this reason, an attempt to provide a high-speed multilevel modulated optical transceiver and multilevel modulated optical transmitting/receiving method results in problems that the circuit configuration becomes complex and also that power consumption is increased.

In order to solve the above-mentioned problems, the present invention has been made, and therefore has an object to easily realize an optical receiving circuit adapted to a plurality of modulation schemes and to obtain a multilevel modulated optical transceiver and a multilevel modulated optical transmitting/receiving method which achieve low power consumption and high speed.

### Solution to Problem

According to the present invention, there is provided a multilevel modulated optical transceiver, which is used for an optical transmission device for transmitting and receiving, as an optical signal, an FEC frame obtained by adding error-correcting code to a data frame containing information data and an overhead, the optical transmission device including a framer and a digital signal processing optical transceiver, the digital signal processing optical transceiver including: a receiver front end for separating an optical reception signal from a communication path into a total of four channels including an I-channel and a Q-channel of an X-polarized wave component and an I-channel and a Q-channel of a Y-polarized wave component; and a digital signal processing unit for: performing signal point determination with respect to signals of the four channels, which are received from the receiver front end; when there are only two signal points, determining that a modulation scheme is binary phase shift keying, and generating a reception signal by selecting two channels including an 1-channel component of an X-polarized wave and an I-channel component of a Y-polarized wave and performing signal processing thereon; and when there are four signal points, determining that the modulation scheme is quadrature phase shift keying, and generating a reception signal by selecting the four channels including the I-channel component and a Q-channel component of the X-polarized wave and the I-channel component and a Q-channel component of the Y-polarized wave and performing the signal processing thereon.

Further, according to the present invention, there is provided a multilevel modulated optical transmitting/receiving method, which is used for an optical transmission device for transmitting and receiving, as an optical signal, an FEC frame obtained by adding error-correcting code to a data frame containing information data and an overhead, the optical transmission device including a framer and a digital signal processing optical transceiver, the multilevel modulated optical transmitting/receiving method including: separating an optical reception signal from a communication path into a total of four channels including an I-channel and a Q-channel of an X-polarized wave component and an I-channel and a Q-channel of a Y-polarized wave component; performing signal point determination with respect to separated signals of the four channels; when there are only two signal points, determining that a modulation scheme is binary phase shift keying, and generating a reception signal by selecting two channels including an I-channel component of an X-polarized wave and an I-channel component of a Y-polarized wave and performing signal processing thereon; and when there are four signal points, determining that the modulation scheme is quadrature phase shift keying, and generating a reception signal by selecting the four channels including the I-channel component and a Q-channel component of the X-polarized wave and the I-channel component and a Q-channel component of the Y-polarized wave and performing the signal processing thereon.

### Advantageous Effects of Invention

According to the multilevel modulated optical transceiver and the multilevel modulated optical transmitting/receiving method of the present invention, the receiver front end has the same configuration regardless of what scheme is used for multilevel modulation or whether polarization multiplexing is employed, and only the signal processing performed by the digital signal processing unit at the subsequent stage has a different configuration in which a simple circuit such as a 1:2 DEMUX is added to an input section of the circuits at the subsequent stage, thereby supporting every modulation scheme. As a result, it is possible to easily realize the optical receiving circuit which supports a plurality of modulation schemes, and to obtain the multilevel modulated optical transceiver and the multilevel modulated optical transmitting/receiving method which achieve low power consumption and high speed.

### Brief Description of Drawings

[FIG. 1] A configuration diagram illustrating a digital communication system using forward error correction according to a first embodiment of the present invention.
[FIG. 2] A configuration diagram illustrating details of an optical transmission device according to the first embodiment of the present invention.
[FIG. 3] A configuration diagram illustrating details of an optical transmission device according to a second embodiment of the present invention.

### Description of Embodiments

Hereinbelow, with reference to the drawings, description is given of preferred embodiments of a multilevel modulated optical transceiver and a multilevel modulated optical transmitting/receiving method of the present invention.

### First embodiment

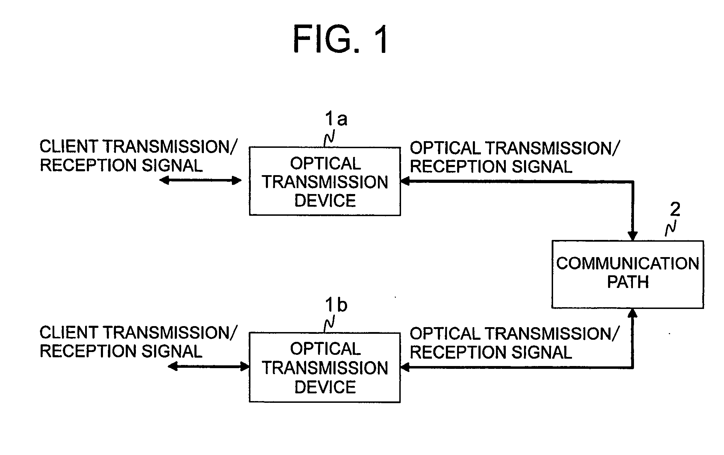

FIG. 1 is a configuration diagram illustrating a digital communication system using forward error correction according to a first embodiment of the present invention. In the description below, such a digital communication system is simply referred to as "optical communication system". The optical communication system of FIG. 1 includes two optical transmission devices 1a and 1b and a communication path 2.

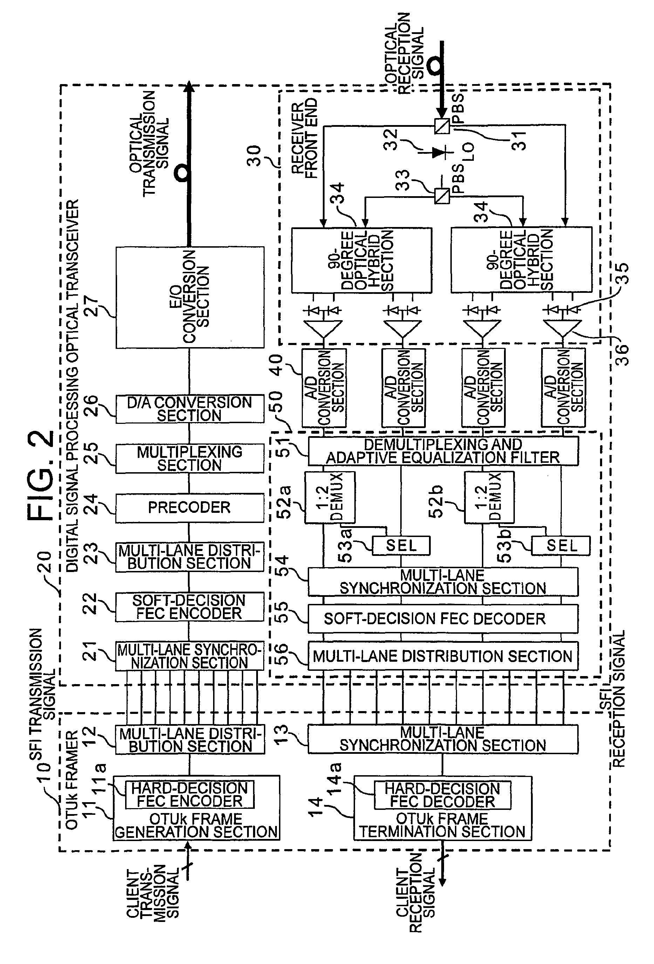

FIG. 2 is a configuration diagram illustrating details of the optical transmission devices 1a and 1b according to the first embodiment of the present invention. The optical transmission device 1a(1b) of FIG. 2 includes an optical channel transport unit-k (OTUk: k=0, 1, 2, 3, 4, ...) framer 10 and a digital signal processing optical transceiver 20. Then, the OTUk framer 10 includes a transmission unit including an OTUk frame generation section 11 and a multi-lane distribution section 12, and a reception unit including a multi-lane synchronization section 13 and an OTUk frame termination section 14. Here, the OTUk frame generation section 11 includes a hard-decision FEC encoder 11 a, and the OTUk frame termination section 14 includes a hard-decision FEC decoder 14a.

On the other hand, the digital signal processing optical transceiver 20 includes an optical transmission unit including a multi-lane synchronization section 21, a soft-decision FEC encoder 22, a multi-lane distribution section 23, a precoder 24, a multiplexing section 25, a D/A conversion section 26, and an E/O conversion 27 section, and an optical reception unit including a receiver front end 30, A/D conversion sections 40, and a digital signal processing unit 50.

Here, the receiver front end 30 includes a polarization beam splitter 31 (PBS 31), a local oscillator 32 (LO 32), a polarization beam splitter 33 (PBS 33), a 90-degree optical hybrid sections 34, O/E conversion sections 35, and AMPs 36. Further, the digital signal processing unit 50 includes a demultiplexing and adaptive equalization filter 51, 1:2 DEMUXs 52a and 52b, selectors 53a and 53b (SELs 53a and 53b), a multi-lane synchronization section 54, a soft-decision FEC decoder 55, and a multi-lane distribution section 56.

Next, operation of the optical transmission device 1a(1b) illustrated in FIG. 2 is described. First, operation of the OTUk framer 10 is described. The OTUk frame generation section 11, which includes the hard-decision FEC encoder 11 a, maps a client transmission signal onto OTUk frames being data frames, and adds information necessary for frame synchronization or maintenance control to thereby generate optical transmission frames, which are then output to the multi-lane distribution section 12.

The multi-lane distribution section 12 distributes the OTUk frames generated by the OTUk frame generation section 11 to a plurality of lanes, and outputs a serdes framer interface (SFI) transmission signal to the digital signal processing optical transceiver 20.

On the other hand, the multi-lane synchronization section 13 achieves synchronization with respect to an SFI reception signal from the digital signal processing optical transceiver 20 among a plurality of lanes, and then outputs OTUk frames to the OTUk frame termination section 14.

The OTUk frame termination section 14, which includes the hard-decision FEC decoder 14a, terminates information necessary for frame synchronization or maintenance control with respect to the OTUk frames synchronized by the multi-lane synchronization section 13, and performs demapping on the OTUk frames to acquire a client reception signal, thereby outputting the client reception signal.

Next, operation of the digital signal processing optical transceiver 20 is described. The multi-lane synchronization section 21 achieves synchronization with respect to the SFI transmission signal from the OTUk framer 10 among the plurality of lanes, and then outputs the resultant SFI transmission signal to the soft-decision FEC encoder 22.

The soft-decision FEC encoder 22 is FEC encoding means, and encodes the SFI transmission signal synchronized by the multi-lane synchronization section 21 by using error-correcting code for soft-decision. The multi-lane distribution section 23 distributes the soft-decision encoded signal to a plurality of lanes. The precoder 24 generates a multi-level optical signal.

The multiplexing section 25 multiplexes outputs from the precoder 24. The D/A conversion section 26 D/A-converts the signal output from the multiplexing section 25. The E/O conversion section 27 converts the analog signal, which is an electric signal from the D/A conversion section 26, to an optical signal, thereby outputting an optical transmission signal to the communication path 2.

On the other hand, the receiver front end 30 converts an optical reception signal from the communication path 2 to an electric analog signal. Specifically, the receiver front end 30 includes the PBS 31 for separating an X-polarized wave and a Y-polarized wave of the optical signal received from the communication path 2, the LO 32 for performing coherent reception, the PBS 33 for performing polarized separation on the LO, the 90-degree optical hybrid sections 34 for mixing the optical signal subjected to the polarized separation and the signal from the LO, the O/E conversion sections 35 for converting the received optical signal to an electric signal, and the AMPs 36 for amplifying the O/E converted signal. Further, the A/D conversion section 40 converts the analog signal received via the AMP 36 to q-bit soft-decision reception data.

Next, the digital signal processing unit 50 performs digital signal processing on the signals after the A/D conversion, and generates the SFI reception signal, which is then output to the OTUk framer 10. Specifically, the demultiplexing and adaptive equalization filter 51 of the digital signal processing unit 50 demultiplexes the q-bit soft-decision reception data, and performs digital signal processing on the demultiplexed signal, thereby correcting distortion of the reception signal.

The 1:2 DEMUXs 52a and 52b each distributes the output from the demultiplexing and adaptive equalization filter 51 to two directions. The SEL 53a selects any one of the signal distributed by the 1:2 DEMUX 52a and the signal output from the demultiplexing and adaptive equalization filter 51 without being distributed, and the SEL 53b selects any one of the signal distributed by the 1:2 DEMUX 52b and the signal output from the demultiplexing and adaptive equalization filter 51 without being distributed.

The multi-lane synchronization section 54 achieves synchronization among a plurality of lanes to perform skew adjustment on each lane, and lane shuffling. The soft-decision FEC decoder 55 performs, for each lane, soft-decision decoding on the q-bit soft-decision reception data. Further, the multi-lane distribution section 56 outputs the SFI reception signal to the OTUk frame.

Based on the series of operations described above, description is given of technical features of a multilevel modulated optical transceiver and a multilevel modulated optical transmitting/receiving method according to the first embodiment of the present invention. As illustrated in FIG. 2, the optical reception unit of the digital signal processing optical transceiver 20 includes the receiver front end 30, the A/D conversion sections 40, and the digital signal processing unit 50. Then, the receiver front end 30 has the same configuration regardless of what scheme is used for the multilevel modulation or whether polarization multiplexing is employed.

On the other hand, the digital signal processing unit 50 at a subsequent stage has a configuration which allows different types of signal processing to be performed in accordance with what scheme is used for the multilevel modulation or whether polarization multiplexing is employed. Specifically, with the provision of the pair of the 1:2 DEMUXs 52a and 52b and the pair of the SELs 53a and 53b between the demultiplexing and adaptive equalization filter 51 and the multi-lane synchronization section 54, it is possible to support every modulation scheme. As a result, an optical receiving circuit which supports a plurality of modulation schemes is realized easily, and a multilevel modulated optical transceiver and a multilevel modulated optical transmitting/receiving method which achieve low power consumption and high speed are realized.

To describe in more detail, the optical reception signal is separated, at the receiver front end 30, into a total of four channels, which are an I-channel and a Q-channel of an X-polarized wave component, and an I-channel and a Q-channel of a Y-polarized wave component. On the other hand, the demultiplexing and adaptive equalization filter 51 of the digital signal processing unit 50 performs signal point determination on the received signals of the four channels in accordance with the modulation scheme.

In this case, when the modulation scheme is the binary phase shift keying, there are only two signal points, and hence, through the rotation of the reception signal, two channels including the I-channel component of the X-polarized wave and the I-channel component of the Y-polarized wave are output.

On the other hand, when the modulation scheme is the quadrature phase shift keying, there are four signal points, and hence the I-channel component and the Q-channel component are generated with respect to each of the X-polarized wave and the Y-polarized wave, with the result that four channels are output.

As described above, the receiver front end 30 has the same configuration regardless of what scheme is used for the multilevel modulation or whether polarization multiplexing is employed, and the signal processing performed by the digital signal processing unit 50 at the subsequent stage has a different configuration. Specifically, by adding simple circuits such as the 1:2 DEMUXs 52a and 52b and the SELs 53a and 53b to the input section of the circuits at the subsequent stage, it is possible to select an appropriate signal in accordance with the modulation scheme when performing the signal processing, which enables supporting every modulation scheme.

Note that, the lane states of the X-polarized wave, the Y-polarized wave, the I-channel, and the Q-channel may be shuffled through the processing by the demultiplexing and adaptive equalization filter 51. In the case of shuffling, it is possible to make correction at the multi-lane synchronization section 54 based on information of MFAS of the OTUk frames.

As described above, according to the first embodiment, the configuration of the receiver front end is such that outputs corresponding to four channels (lanes) are always processed regardless of the used modulation scheme. On the other hand, in the digital signal processing unit at the subsequent stage, outputs corresponding to two channels are made in the case of the DP-BPSK, whereas outputs corresponding to four channels are made in the case of the DP-QPSK. In addition, in order to realize, regardless of the modulation scheme, four-channel operation at the OTN-MLD and the error correction decoding section provided at a further subsequent stage, the 1:2 DEMUX sections and the SEL sections are added, thereby attempting to achieve the sharing of the circuits. As a result, it is possible to configure such an optical reception unit that achieves low power consumption and supports various types of modulation schemes.

### Second embodiment

In the first embodiment described above, description has been given of the case where the 1:2 DEMUXs 52a and 52b and the SELs 53a and 53b are provided between the demultiplexing and adaptive equalization filter 51 and the multi-lane synchronization section 54 in the digital signal processing unit 50. In contrast, in a second embodiment of the present invention, description is given of a multilevel modulated optical transceiver and a multilevel modulated optical transmitting/receiving method in which the configuration of a digital signal processing unit 50 is different from that of the first embodiment described above, and which provide the same effect as in the first embodiment described above.

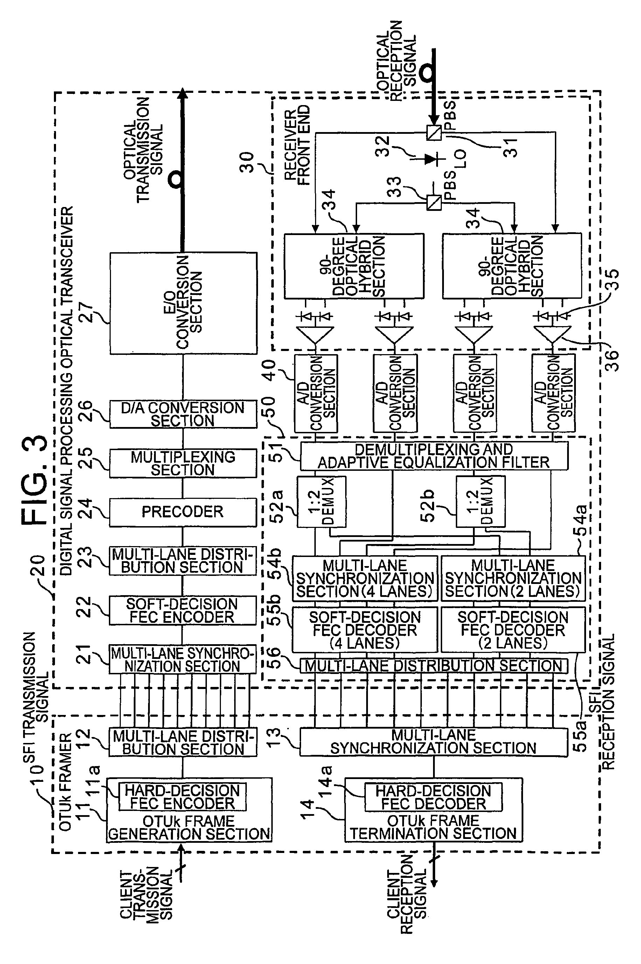

FIG. 3 is a configuration diagram illustrating details of optical transmission devices 1a and 1b according to the second embodiment of the present invention. The basic configuration is the same as the configuration of FIG. 2 according to the first embodiment described above, and there is a difference only in configuration of the digital signal processing unit 50. Then, description is given below by focusing on this difference.

The digital signal processing unit 50 according to the second embodiment of the present invention includes the demultiplexing and adaptive equalization filter 51, the 1:2 DEMUXs 52a and 52b, a multi-lane synchronization section 54a and a soft-decision FEC decoder 55a for two lanes, a multi-lane synchronization section 54b and a soft-decision FEC decoder 55b for four lanes, and the multi-lane distribution section 56.

In the first embodiment described above, with the provision of the pair of the 1:2 DEMUXs 52a and 52b and the pair of the SELs 53a and 53b between the demultiplexing and adaptive equalization filter 51 and the multi-lane synchronization section 54, it is possible to support every modulation scheme. In contrast, in the second embodiment of the present invention, the multi-lane synchronization sections (54a and 54b) and the soft-decision FEC decoders (55a and 55b) are provided separately in blocks corresponding to two lanes and four lanes, and hence there is no need for the above-mentioned SELs 53a and 53b illustrated in FIG. 2.

In the case of adopting a modulation scheme using all four lanes, such as the polarization-multiplexing quadrature phase shift keying, processing is performed in the block corresponding to four lanes. On the other hand, in the case of adopting a modulation scheme using only two lanes, such as the polarization-multiplexing binary phase shift keying, processing is performed in the block corresponding to two lanes. Performing such processing enables supporting every modulation scheme.

Further, in FIG. 3, the 1:2 DEMUXs 52a and 52b are placed on a first lane and a third lane, respectively. However, as described above, there is uncertainty regarding which signal is to be output to which lane at the demultiplexing and adaptive equalization filter 51. In view of the above, the 1:2 DEMURS may be placed on all of first to fourth lanes so that inputs are made to the multi-lane synchronization section (two lanes) 54a. Then, when the lane shuffling is performed at the multi-lane synchronization, necessary two lanes may be selected to perform the processing.

As described above, according to the second embodiment, the same effect as in the first embodiment described above can be obtained as well with the use of the digital signal processing unit having the configuration different from that of the first embodiment described above. Specifically, the configuration of the receiver front end is such that outputs corresponding to four channels (lanes) are always processed regardless of the used modulation scheme. On the other hand, at the digital signal processing unit at the subsequent stage, the processing is performed in the block corresponding to two lanes in the case of the DP-BPSK, whereas the processing is performed in the block corresponding to four lanes in the case of the DP-QPSK, thereby achieving the sharing of the circuits. As a result, it is possible to configure an optical reception unit which achieves low power consumption and supports a various types of modulation schemes.

## Claims

1. A multilevel modulated optical transceiver, which is used for an optical transmission device for transmitting and receiving, as an optical signal,
an FEC frame obtained by adding error-correcting code to a data frame containing information data and an overhead,
the optical transmission device comprising a framer and a digital signal processing optical transceiver,
the digital signal processing optical transceiver comprising:
a receiver front end for separating an optical reception signal from a communication path into a total of four channels including an I-channel and a Q-channel of an X-polarized wave component and an I-channel and a Q-channel of a Y-polarized wave component; and
a digital signal processing unit for:
performing signal point determination with respect to signals of the four channels, which are received from the receiver front end;
when there are only two signal points, determining that a modulation scheme is binary phase shift keying, and generating a reception signal by selecting two channels including an I-channel component of an X-polarized wave and an I-channel component of a Y-polarized wave and performing signal processing thereon; and
when there are four signal points, determining that the modulation scheme is quadrature phase shift keying, and generating a reception signal by selecting the four channels including the I-channel component and a Q-channel component of the X-polarized wave and the I-channel component and a Q-channel component of the Y-polarized wave and performing the signal processing thereon.

2. A multilevel modulated optical transceiver according to claim 1, wherein the FEC frame comprises an OTUk frame.

3. A multilevel modulated optical transmitting/receiving method, which is used for an optical transmission device for transmitting and receiving, as an optical signal, an FEC frame obtained by adding error-correcting code to a data frame containing information data and an overhead,
the optical transmission device comprising a framer and a digital signal processing optical transceiver,
the multilevel modulated optical transmitting/receiving method comprising:
separating an optical reception signal from a communication path into a total of four channels including an I-channel and a Q-channel of an X-polarized wave component and an I-channel and a Q-channel of a Y-polarized wave component;
performing signal point determination with respect to separated signals of the four channels;
when there are only two signal points, determining that a modulation scheme is binary phase shift keying, and generating a reception signal by selecting two channels including an I-channel component of an X-polarized wave and an I-channel component of a Y-polarized wave and performing signal processing thereon; and
when there are four signal points, determining that the modulation scheme is quadrature phase shift keying, and generating a reception signal by selecting the four channels including the I-channel component and a Q-channel component of the X-polarized wave and the I-channel component and a Q-channel component of the Y-polarized wave and performing the signal processing thereon.
